# EUROPÄISCHE PATENTSCHRIFT

(11) **EP 4 109 789 B1**
(45) Veröffentlichungstag und Bekanntmachung des Hinweises auf die Patenterteilung: **03.06.2026**
(21) Anmeldenummer: 22177890.5
(22) Anmeldetag: 08.06.2022
(51) Int. Cl.: H04J 3/06, H04J 3/14, H04L 12/40

(54) **VERFAHREN UND SYSTEM FÜR EINE ZEITSYNCHRONISATION**
METHOD AND SYSTEM FOR TIME SYNCHRONISATION
PROCÉDÉ ET SYSTÈME POUR UNE SYNCHRONISATION TEMPORELLE

(30) Priorität: 23.06.2021 DE 102021116261
(43) Veröffentlichungstag der Anmeldung: 28.12.2022
(73) Patentinhaber: Vector Informatik GmbH, 70499 Stuttgart (DE)
(72) Erfinder: Wolf, Jonas, 71069 Sindelfingen (DE)
(74) Vertreter: Patentanwälte Bregenzer und Reule Partnerschaftsgesellschaft mbB

(56) Entgegenhaltungen:
- WO-A1-2013/101391
- WO-A1-2020/151806
- DE-A1- 102011 087 472
- US-A1- 2016 315 756

## Beschreibung

Die Erfindung betrifft ein Verfahren zu einer Zeitsynchronisation in einem System, insbesondere Steuerung eines Kraftfahrzeugs, gemäß dem Oberbegriff des Anspruchs 1.

Ein derartiges Verfahren ist beispielsweise in DE 102011 087 472 A1 oder US 2016/0315756 A1 erläutert.

DE 10 2011 087 472 A1 beschreibt, wie ein Synchronisationstelegramm eines Master-Knotens in dem Slave-Knoten ausgewertet wird, um eine Uhrengeschwindigkeit der Slave-Uhr an die Uhrengeschwindigkeit der Master-Uhr anzupassen. Der Slave-Knoten sendet weiterhin ein Delay-Request-Telegramm an die Master-Uhr, die durch ein Delay-Response-Telegramm beantwortet wird.

US 2016/0315756 A1 erläutert eine Kommunikation mit einem zu testenden Gerät, welches mit einer Rück-Synchronisationsnachricht antwortet, die die Uhrzeit der synchronisierten Uhr des unter Test befindlichen Geräts rückmeldet.

WO 2020/151896 betrifft die zeitliche Synchronisation zwischen zwei Netzwerken.

Beispielsweise dient das System zur Steuerung und/oder Überwachung eines Kraftfahrzeugs. Das System umfasst beispielsweise eines oder mehrere Steuergeräte sowie Sensoren. Die Sensoren sind erforderlich, um die Umgebung des Kraftfahrzeugs zu erfassen. Die Sensoren erfassen Sensordaten aus der physikalischen Umgebung des Kraftfahrzeugs zu unterschiedlichen Erfassungszeitpunkten. Diese sind für Daten müssen in zeitliche Korrelation zueinander gebracht werden. Dazu ist es erforderlich, dass die Umgebungsdaten mit Zeitinformationen, beispielsweise sogenannten Zeitstempeln, versehen werden. Eine die Sensordaten verarbeitende Systemkomponente, beispielsweise ein Steuergerät für ein Fahrstabilitätsprogramm, ein Steuergerät zum autonomen Fahren oder dergleichen, bringt die Sensordaten anhand der ihnen zugeordneten Zeitinformationen in zeitliche Korrelation.

Es ist wesentlich, dass die Systemkomponenten des Systems, die miteinander zeitlich relevante Nachrichten kommunizieren, möglichst mit der gleichen Zeitbasis arbeiten. Dementsprechend gibt der Zeitgeber die Zeit vor, die von den Zeitnehmer übernommen wird. Der Zeitgeber ist also beispielsweise ein sogenannter Time-Master, während der oder die Zeitnehmer sogenannte Time-Slaves sind. Der Zeitgeber und der mindestens eine Zeitnehmer sind beispielsweise durch eine Bus-Leitung miteinander vernetzt, zum Beispiel einen CAN-Bus, einen Flexray-Bus oder dergleichen. Der Zeitgeber und der mindestens eine Zeitnehmer bilden beispielsweise eine sogenannte Zeit-Domäne.

Wenn das System auf einem sicherheitsrelevanten Gebiet eingesetzt wird, beispielsweise zum autonomen Fahren, ist eine hohe zeitliche Genauigkeit der Sensordaten erforderlich, damit die zeitliche Korrelation der Sensordaten bei deren Auswertung richtig ist. Somit ist es also wesentlich, dass Zeitgeber und Zeitnehmer möglichst optimal synchronisiert sind.

Die Genauigkeit der Zeit der Zeitnehmer-Uhr des Time-Slaves oder Zeitnehmers kann beispielsweise dadurch verbessert werden, dass der Zeitgeber eine oder mehrere weitere Zeitsynchronisationsnachrichten an den Zeitnehmer versendet.

Eine derartige Vorgehensweise ist jedoch aufwendig und kann im Falle eines Fehlers, insbesondere bei der fehlerhaften Übertragung einer Zeitsynchronisationsnachricht oder dergleichen, nicht sicherstellen, dass Zeitgeber und Zeitnehmer ausreichend synchron sind.

Es ist daher die Aufgabe der vorliegenden Erfindung, ein verbessertes Verfahren zu einer Zeitsynchronisation anzugeben.

Zur Lösung der Aufgabe ist ein Verfahren gemäß der technischen Lehre des Anspruchs 1 vorgesehen.

Zur Lösung der Aufgabe ist ferner ein System zur Zeitsynchronisation gemäß der technischen Lehre des Anspruchs 12 vorgesehen.

Die Aufgabe wird ferner durch einen Zeitgeber und einen Zeitnehmer des oben genannten Systems gelöst.

Der Zeitgeber und/oder der Zeitnehmer können als eine Software oder als Softwarekomponenten mit durch einen Prozessor ausführbare Programmcode ausgestaltet sein. Der Zeitgeber und/oder der Zeitnehmer können eines oder mehrere Softwaremodule aufweisen oder als eines oder mehrere Softwaremodule ausgestaltet sein. Beispielsweise sind der Zeitgeber und/oder der Zeitnehmer als ein Zeitmodul ausgestaltet oder weisen ein Zeitmodul auf. Beispielsweise ist vorgesehen, dass der Zeitgeber und/oder der Zeitnehmer, beispielsweise das Zeitmodul, Programmcode aufweisen, der durch einen Prozessor ausführbar ist, sodass der Zeitgeber oder der Zeitnehmer bzw. das Zeitmodul die Schritte des erfindungsgemäßen Verfahrens sowie auch der nachfolgend erläuterten vorteilhaften Ausgestaltungen des Verfahrens bei Ausführung des Programmcodes durch den Prozessor leisten. Es versteht sich, dass zur Bereitstellung der Funktionalität des Zeitgebers und der Funktionalität des Zeitnehmers unterschiedliche Zeitmodule vorgesehen sein können.

Der Zeitgeber und der Zeitnehmer können als Vorrichtungen ausgestaltet sein oder Bestandteile von Vorrichtungen sein, beispielsweise Bestandteile eines Steuergeräts für ein Kraftfahrzeug, eines Sensors für ein Kraftfahrzeug oder dergleichen.

Der Zeitgeber und/oder der Zeitnehmer weisen beispielsweise einen Prozessor zur Ausführung von Programmcode des Zeitmoduls auf, wobei das Zeitmodul die jeweiligen Verfahrensschritte des Zeitgebers oder des Zeitnehmers oder beiden durchführt. Wie später noch deutlich wird, kann nämlich eine Vorrichtung sowohl die Rolle eines Zeitgebers als auch die Rolle eines Zeitnehmers in dem System leisten oder mindestens eine Zeitnehmer und mindestens einen Zeitgeber enthalten. Mithin kann also beispielsweise eine Vorrichtung zwar für eine mit ihr verbundene Vorrichtung des Systems einen Zeitgeber bilden oder einen Zeitgeber für diese verbundene Vorrichtung aufweisen, jedoch in Bezug auf eine andere Vorrichtung ein Zeitnehmer sein oder einen Zeitnehmer aufweisen.

Es ist ein Grundgedanke der vorliegenden Erfindung, dass sozusagen eine Rücksynchronisation des Zeitgebers durch den Zeitnehmer erfolgt.

Die Zeitnehmer-Zeitangabe in der Zeitrücksynchronisationsnachricht enthält beispielsweise die Uhrzeit der Zeitnehmer-Uhr, beispielsweise die Uhrzeit der Zeitnehmer Uhr zum Zeitpunkt des Versands der Zeitrücksynchronisationsnachricht.

Die Zeitsynchronisation als solche kann beispielsweise nach einem standardisierten Protokoll, beispielsweise IEEE 1588 oder AUTOSAR, erfolgen.

Bei dem Zeitgeber oder einer den Zeitgeber enthaltenden Vorrichtung des Systems handelt es sich beispielsweise um ein Steuergerät eines Kraftfahrzeugs.

Das Steuergerät steuert beispielsweise eine Fahrstabilität des Kraftfahrzeugs, ist zum autonomen Fahren des Kraftfahrzeugs ausgestaltet oder dergleichen.

Bei dem Zeitnehmer handelt es sich vorzugsweise um eine Vorrichtung mit einem Sensor oder um einen Sensor. Der Sensor ist beispielsweise eine Kamera, ein Radarsensor, ein Ultraschallsensor, ein Beschleunigungssensor oder ein Sensor, der für ein elektronisches Fahrstabilitätsprogramm und/oder zum autonomen Fahren notwendig ist. Wesentlich ist es, dass Sensorsignale oder Sensorwerte, die derartige Sensoren an den Zeitgeber oder die den Zeitgeber enthaltende Komponente des Systems mit synchronisierten Zeitinformationen und/oder anhand synchronisierter Zeit versenden, sodass diese vom Zeitgeber oder der den Zeitgeber enthaltenen Komponente in einen zeitlichen Zusammenhang bringbar sind. So kann beispielsweise eine Bildinformation einer Kamera mit einem Sensorwert eines Ultraschallsensors in zeitlichen Zusammenhang gebracht werden, um eine Funktion eines Kraftfahrzeugs anzusteuern, beispielsweise dessen Fahrstabilität zu beeinflussen und/oder dieses im Rahmen eines autonomen Fahrens zu steuern.

Vorteilhaft ist vorgesehen, dass der Zeitnehmer oder eine den Zeitnehmer enthaltende Vorrichtung Meldenachrichten an den Zeitgeber oder eine den Zeitgeber enthaltende Vorrichtung sendet. Eine derartige Meldenachricht enthält eine Meldeinformation, beispielsweise einen Sensorwert, sowie eine Zeitinformation, zum Beispiel ein sogenannter Zeitstempel, der die Meldeinformation qualifiziert. Die Zeitinformation ist vorzugsweise anhand der Zeitnehmer-Uhr generiert oder generierbar. So kann die Meldeinformation beispielsweise ein Sensorwert eines Sensors sein, wobei ein Erfassungszeitpunkt des Sensorwerts durch die Zeitinformation angegeben ist.

Die Zeitrücksynchronisationsnachricht ist vorzugsweise eine von einer Meldenachricht des Zeitnehmers oder allen Meldenachrichten separate Nachricht. Eine Meldenachricht ist eine solche Nachricht, die keine Zeitinformation enthält oder eine Zeitinformation, die zusätzlich zu einer Meldeinformation, beispielsweise einem Sensorwert, in der Meldenachricht enthalten ist. Die Zeitrücksynchronisationsnachricht dient vorzugsweise ausschließlich der Rücksynchronisation bzw. Rückmeldung und/oder enthält ausschließlich die bei der Zeitnehmer-Uhr des Zeitnehmers eingestellte Zeit. Mithin ist es also vorteilhaft, wenn die Zeitrücksynchronisationsnachricht eine von Meldenachrichten des Zeitnehmers separate Nachricht ist, die ausschließlich zur Rückmeldung der Zeitnehmer-Zeitangabe an den Zeitgeber dient.

Beispielhafte Folgeaktionen des Zeitgebers werden nachfolgend erläutert:
Ein vorteilhaftes Konzept sieht vor, dass die mindestens eine Folgeaktion eine Überprüfung umfasst, ob die Zeitnehmer-Uhr in einem zeitlichen Toleranzbereich bezüglich der Zeitgeber-Uhr arbeitet. Der Zeitgeber kann durch den Vergleich der Zeitnehmer-Zeitangabe der Zeitrücksynchronisationsnachricht mit einer von seiner Zeitgeber-Uhr erzeugten oder erhaltenen Zeitinformation beispielsweise eine Genauigkeitsinformation über die Genauigkeit der beim Zeitnehmer eingestellten Zeit ermitteln.

Vorteilhaft ist vorgesehen, dass die mindestens eine Folgeaktion umfasst, dass der Zeitgeber einen Steuerbefehl an den Zeitnehmer in Abhängigkeit von der Zeitnehmer-Zeitangabe der Zeitrücksynchronisationsnachricht versendet. Beispielsweise kann der Steuerbefehl eine Einstellungsinformation enthalten, mit der der Zeitgeber dem Zeitnehmer zur Einstellung der Zeitnehmer-Uhr ansteuert, beispielsweise zu einer Korrektur der an der Zeitnehmer-Uhr eingestellten Uhrzeit. Es ist auch möglich, dass der Steuerbefehl beispielsweise einen Zeitpunkt zum Ermitteln einer Information durch den Zeitnehmer enthält. Der Zeitpunkt kann von dem Zeitgeber abhängig von der Zeitnehmer-Zeitangabe der Zeitrücksynchronisationsnachricht angepasst sein, sodass beispielsweise der Zeitgeber eine zeitliche Abweichung der Zeitnehmer-Uhr von der Zeitgeber-Uhr bei der Vorgabe des Zeitpunkts zum Ermitteln der Information berücksichtigt.

Weiterhin kann vorgesehen sein, dass der Zeitgeber den Steuerbefehl in Abhängigkeit davon an den Zeitnehmer sendet oder nicht sendet, ob die Zeitnehmer-Uhr in einem vorgegebenen zeitlichen Toleranzbereich bezüglich der Zeitgeber-Uhr arbeitet. Beispielsweise ist es möglich, dass der Zeitgeber nur dann den Zeitnehmer durch den Steuerbefehl hinsichtlich mindestens einer Information abfragt, wenn die Zeitnehmer-Uhr innerhalb des Toleranzbereiches liegt, während bei einer größeren Abweichung die Information für den Zeitgeber nutzlos wäre.

Es ist aber auch möglich, dass der Zeitgeber einen Sendezeitpunkt des Steuerbefehls in Abhängigkeit von der Zeitnehmer-Zeitangabe der Zeitrücksynchronisationsnachricht wählt. Ein vorteilhaftes Konzept sieht nämlich vor, dass der Zeitgeber einen Sendezeitpunkt des Steuerbefehls abhängig von einer Zeitdifferenz zwischen der Zeitgeber-Uhr und der Zeitnehmer-Uhr wählt. So kann der Zeitgeber beispielsweise den Steuerbefehl früher oder später senden, sodass der Zeitnehmer den Steuerbefehl zum sozusagen aus der Perspektive des Zeitgebers richtigen Zeitpunkt ausführt.

Weiterhin ist es vorteilhaft, wenn der Zeitgeber einen Ausführungszeitpunkt zur Ausführung des Steuerbefehls in Abhängigkeit von einer Zeitdifferenz zwischen der Zeitgeber-Uhr und der Zeitnehmer-Uhr in dem Steuerbefehl angibt. Somit kann also beispielsweise der Ausführungszeitpunkt beispielsweise eines Schaltbefehls, mit dem der Zeitgeber eine Schalthandlung durchführt, der Ausführungszeitpunkt einer Erfassung eines Sensorwerts oder dergleichen, optimal einstellbar sein.

Es ist auch möglich, dass der Zeitnehmer sozusagen nur darüber informiert wird, ob die bei ihm eingestellte Zeit in Ordnung ist. So kann ein vorteilhaftes Konzept vorsehen, dass die mindestens eine Folgeaktion umfasst, dass der Zeitgeber dem Zeitnehmer eine Information darüber sendet, ob sich die Zeitnehmer-Uhr innerhalb eines zeitlichen Toleranzbereichs bezüglich der Zeitgeber-Uhr befindet und/oder die Zeitnehmer-Uhr eine von dem Zeitnehmer akzeptierte, gültige Zeit aufweist. Anhand der Information kann der Zeitnehmer beispielsweise erkennen, ob er sozusagen richtig synchronisiert ist.

Vorteilhaft ist es, wenn der Zeitnehmer an den Zeitgeber Meldenachrichten senden kann. Eine derartige Meldenachricht umfasst beispielsweise mindestens eine von einer Zeitnehmer-Zeitangabe separate Information und/oder mindestens einen Sensorwert oder Statuswert des Zeitnehmers.

Eine Konsequenz einer nicht ausreichend synchronen zeitlichen Einstellung des Zeitnehmers kann beispielsweise sein, dass der Zeitnehmer Meldenachrichten an den Zeitgeber nicht oder unter bestimmten Bedingungen sendet.

Vorteilhaft ist es beispielsweise vorgesehen, dass der Zeitnehmer Meldenachrichten nur dann an den Zeitgeber sendet, wenn die Zeitnehmer-Uhr innerhalb des zeitlichen Toleranzbereichs bezüglich der Zeitgeber-Uhr ist. Ansonsten blockiert der Zeitnehmer Meldenachrichten.

Weiterhin kann vorgesehen sein, dass der Zeitnehmer Meldenachrichten nur dann an den Zeitgeber sendet, wenn die Zeitnehmer-Uhr eine von dem Zeitgeber akzeptierte, gültige Zeit aufweist. Wenn also der Zeitgeber dem Zeitnehmer anhand der oben erläuterten Information, dass die vom Zeitnehmer eingestellte Zeit gültig ist, signalisiert, kann der Zeitnehmer ausgehend davon Meldenachrichten an den Zeitgeber senden. Der Zeitnehmer weiß also sozusagen, dass die bei ihm eingestellte Zeit in Ordnung ist.

Wie erwähnt kann der Zeitgeber beispielsweise ein Steuergerät sein, welches von verschiedenen Sensoren an Bord der Zeitnehmer Meldeinformationen erhält. Die Funktion des Zeitgebers bildet dabei nur einen Teil des Steuergeräts, während andere Komponenten beispielsweise die Informationen der Sensoren verarbeiten. Diese anderen Komponenten erhalten Meldenachrichten von den Sensoren, die sozusagen Zeitnehmer sind oder Software in Gestalt von Zeitmodulen zur Realisierung ihrer Funktion als Zeitnehmer aufweisen.

Vorteilhaft kann vorgesehen sein, dass der Zeitnehmer Meldenachrichten an den Zeitgeber mit einer Information versieht, die angibt, ob die Zeitnehmer-Uhr innerhalb des zeitlichen Toleranzbereichs ist und/oder die gültige Zeit aufweist. Somit muss also der Zeitgeber nicht stets überprüfen, ob eine Meldenachricht als eine gültige Nachricht oder eine ungültige Nachricht zu werten ist. **In** der jeweiligen Meldenachricht ist angegeben, ob die Zeitnehmer-Uhr des Sensors innerhalb zeitlicher Toleranzen des Zeitgebers arbeitet oder gültige Zeiten aufweist. Somit ist also die eigentliche Zeitgeber-Komponente des Zeitgebers nicht in eine Analyse einer jeweiligen Meldenachricht involviert. Vielmehr kann beispielsweise eine sonstige Komponente des Zeitgebers, die mit der Zeitgeber-Funktion des Zeitgebers nichts zu tun hat, allein schon aus der Meldenachricht erkennen, ob sie in zeitlicher Hinsicht gültig ist.

Im Rahmen einer Zeitsynchronisation kann der Zeitgeber optional auch eine Versandzeitinformationsnachricht, beispielsweise eine sogenannte Follow-up-Message, an den Zeitnehmer versenden, in der der Zeitgeber den Versandzeitpunkt der Zeitsynchronisationsnachricht angibt. Aufgrund der Versandzeitinformationsnachricht oder der Follow-up-Message kann Zeitnehmer seine Zeitnehmer-Uhr sozusagen nachstellen oder optimal einstellen, indem nämlich eine Verzögerung zwischen dem Auslesen der Zeitgeber-Uhr, bei dem die Zeitgeber-Zeitangabe für die Zeitsynchronisationsnachricht ermittelt wird, und dem Versenden der Zeitsynchronisationsnachricht als Zusatzinformation zu der Zeitgeber-Zeitangabe für den Zeitnehmer zur Verfügung steht, sodass der Zeitnehmer seine Zeitnehmer-Uhr anhand der Zeitgeber-Zeitangabe sowie der Versandzeitinformation einstellen kann. Vorteilhaft ist also vorgesehen, dass der Zeitgeber dem Zeitnehmer nach dem Versenden der Zeitsynchronisationsnachricht eine Versandzeitinformationsnachricht sendet, die eine Versandzeitinformation über den Zeitpunkt des Versands der Zeitsynchronisationsnachricht enthält oder aufweist, wobei der Zeitnehmer die Zeitnehmer-Uhr anhand der Versandzeitinformation die Zeitnehmer-Uhr einstellen und/oder korrigieren kann.

Eine derartige Vorgehensweise ist aber auch optimal im Zusammenhang mit der Zeitrücksynchronisationsnachricht vorteilhaft. So ist vorteilhaft vorgesehen, dass der Zeitnehmer dem Zeitgeber nach dem Versenden der Zeitrücksynchronisationsnachricht eine Versandzeitinformationsnachricht sendet, die eine Versandzeitinformation über den Zeitpunkt des Versands der Zeitrücksynchronisationsnachricht enthält oder aufweist, wobei der Zeitgeber eine dem Zeitnehmer zugeordnete Zeitnehmer-Überwachungsuhr anhand der Versandzeitinformation einstellen und/oder korrigieren kann.

Weiterhin ist es vorteilhaft, wenn Laufzeitverzögerungen auf einem Übertragungsweg zwischen Zeitgeber und Zeitnehmer anhand von der jeweiligen Zeitsynchronisationsnachricht oder Zeitrücksynchronisationsnachricht versendeten Nachrichten ermittelt werden. So ist es beispielsweise möglich, dass der jeweilige Zeitnehmer seinem Zeitgeber eine Verzögerungsanforderungsnachricht mit einer Anforderung zum Versenden einer Verzögerungsantwortnachricht versendet. Unter Verzögerungszeit diesem Zusammenhang die Laufzeitverzögerung zu verstehen, die sich durch die Laufzeit von Nachrichten auf dem Übertragungsweg zwischen Zeitgeber und Zeitnehmer ergeben. Der Zeitgeber beantwortet die Verzögerungsanforderungsnachricht mit einer Verzögerungsantwortnachricht. Der Zeitnehmer kann anhand einer aus der Kommunikation der Verzögerungsanforderungsnachricht und der Verzögerungsantwortnachricht ermittelten Zeitinformation, beispielsweise einer Zeitdifferenz zwischen der Verzögerungsanforderungsnachricht und dem Empfang der Verzögerungsantwortnachricht, die bei der Zeitnehmer-Uhr eingestellte Zeit um die Zeitinformation, beispielsweise die Zeitdifferenz, korrigieren.

Ohne weiteres ist diese Prozedur auch im Zusammenhang mit der Zeitrücksynchronisationsnachricht möglich, d. h. dass der die Zeitrücksynchronisationsnachricht empfangende Zeitgeber dem sozusagen rücksynchronisierenden Zeitnehmer eine Verzögerungsanforderungsnachricht sendet, die der Zeitnehmer mit der Verzögerungsantwortnachricht beantwortet, sodass der Zeitgeber beispielsweise eine dem Zeitnehmer zugeordnete Zeitnehmer-Überwachungsuhr um eine Zeitinformation korrigieren, die der Zeitgeber durch die Kommunikation von Verzögerungsanforderungsnachricht und Verzögerungsantwortnachricht ermittelt, beispielsweise um eine Zeitdifferenz zwischen Versand der Verzögerungsanforderungsnachricht und dem Empfang der Verzögerungsantwortnachricht, korrigieren kann.

An dieser Stelle wird deutlich, dass die Zeitrücksynchronisationsnachricht vorteilhaft keine dediziert ausschließlich zur Ermittlung einer Bearbeitungsverzögerung innerhalb der den Zeitgeber enthaltenden Vorrichtung und/oder zur Ermittlung einer Bearbeitungsverzögerung innerhalb der den Zeitnehmer enthaltenen Vorrichtung ist, wobei die Bearbeitungsverzögerung beispielsweise eine Bearbeitungszeit zwischen einerseits der Erfassung einer Uhrzeit der jeweiligen Zeitgeber-Uhr oder Zeitnehmer-Uhr ist. Die Zeitsynchronisationsnachricht oder Zeitrücksynchronisationsnachricht ist also verschieden von der Follow-up-Nachricht oder Versandzeitinformationsnachricht. Weiterhin ist die Zeitsynchronisationsnachricht oder Zeitrücksynchronisationsnachricht vorteilhaft verschieden von einer Verzögerungsanforderungsnachricht oder Verzögerungsantwortnachricht.

Die Genauigkeit und/oder Zuverlässigkeit der bei den Uhren der Vorrichtungen oder Systemkomponenten des Systems eingestellten Zeiten können durch die nachfolgenden Maßnahmen erhöht werden:
Zur weiteren Erhöhung der Genauigkeit der Zeitnehmer-Uhr können aber auch wiederholt Zeitsynchronisationsnachrichten vom Zeitgeber und/oder Zeitrücksynchronisationsnachrichten von dem Zeitnehmer versendet werden. Dabei ist es möglich, dass nicht jede Zeitsynchronisationsnachricht im Zusammenhang mit einer Zeitrücksynchronisationsnachricht oder umgekehrt steht. Beispielsweise ist es möglich, dass der Zeitgeber mehrere Zeitsynchronisationsnachrichten sendet, von denen ich die jede vom Zeitnehmer mit einer Zeitrücksynchronisationsnachricht beantwortet wird. Es ist aber auch möglich, dass der Zeitnehmer dem Zeitgeber mehrere Zeitsynchronisationsnachrichten, beispielsweise periodisch, zyklisch oder dergleichen, sendet, sodass der Zeitgeber auf diesem Wege den Zeitnehmer regelmäßig überwachen kann. Ohne weiteres ist es möglich, dass der Zeitgeber und/oder der Zeitnehmer im Zusammenhang mit der jeweiligen Zeitsynchronisationsnachricht oder Zeitrücksynchronisationsnachricht jeweils eine oder mehrere der vorgenannten Versandzeitinformationsnachricht senden.

Ein vorteilhaftes Konzept sieht vor, dass die mindestens eine Folgeaktion umfasst, dass der Zeitgeber dem Zeitnehmer mindestens eine weitere Zeitsynchronisationsnachricht zur Synchronisation der Zeitnehmer-Uhr sendet, wobei die weitere Zeitsynchronisationsnachricht eine Zeitinformation zur Verringerung einer zeitlichen Abweichung zwischen der Zeitnehmer-Uhr und der Zeitgeber-Uhr enthält. Vorteilhaft ist es, wenn der Zeitnehmer dem Zeitgeber periodisch und/oder zyklisch und/oder innerhalb vorbestimmter zeitlicher Abstände weitere Zeitsynchronisationsnachrichten sendet. Diese Abstände sind vorzugsweise gleiche Abstände, können aber auch unterschiedliche Abstände sein.

Anhand der mindestens einen weiteren Zeitsynchronisationsnachricht, insbesondere anhand der regelmäßig oder immer wieder gesendeten Zeitsynchronisationsnachrichten, kann der Zeitnehmer seine Zeitnehmer-Uhr regelmäßig neu einstellen und/oder gegebenenfalls überprüfen, ob seine Zeitnehmer-Uhr in ausreichendem Maße genau bezüglich der Zeitgeber-Uhr eingestellt ist. Weiterhin kann der Zeitnehmer aber auch überprüfen, ob seine Kommunikationsbeziehung in zeitlicher Hinsicht mit dem Zeitgeber in Ordnung ist. So kann beispielsweise vorgesehen sein, dass der Zeitnehmer überprüft, ob er innerhalb eines vorbestimmten zeitlichen Abstandes und/oder innerhalb einer vorbestimmten Zykluszeit Zeitsynchronisationsnachrichten von dem Zeitgeber erhält. Somit ist ein sogenanntes Timeout-Monitoring möglich.

Vorteilhaft ist es weiterhin, wenn der Zeitnehmer nach Erhalt der mindestens einen weiteren Zeitsynchronisationsnachricht mindestens eine weitere Zeitrücksynchronisationsnachricht mit mindestens einer Zeitnehmer-Zeitangabe, die anhand der durch die Zeitgeber-Zeitangabe in der mindestens einen weiteren Zeitsynchronisationsnachricht eingestellten Zeitnehmer-Uhr erzeugt ist, an den Zeitgeber sendet, wobei der Zeitgeber anhand eines Vergleichs dieser weiteren Zeitnehmer-Zeitangabe mit einer Zeitinformation seiner Zeitgeber-Uhr mindestens eine weitere Folgeaktion erzeugt. Mithin kann also der erfindungsgemäße Prozess, dass der Zeitnehmer nach Erhalt einer Zeitsynchronisationsnachricht eine weitere Zeitrücksynchronisationsnachricht an den Zeitgeber sendet, bei zumindest einer der weiteren Zeitsynchronisationsnachrichten wiederholt werden.

Beispielsweise kann der Zeitgeber bereits im Zusammenhang mit der ersten oder auch weiteren Zeitsynchronisationsnachrichten die folgende Maßnahme leisten. Bei einer Variante der Erfindung ist vorgesehen, dass der Zeitgeber überprüft, ob er nach dem Versenden einer Zeitsynchronisationsnachricht an den Zeitnehmer innerhalb einer vorbestimmten Zeit eine Zeitrücksynchronisationsnachricht von dem Zeitnehmer erhält, der die Zeitsynchronisationsnachricht empfangen hat.

Es versteht sich, dass vorteilhafterweise der Zeitgeber seine Zeitgeber-Uhr auf Funktion und Genauigkeit überwacht. Auch beim Zeitnehmer ist es vorteilhaft, wenn er seine Zeitnehmer-Uhr auf Funktion und Genauigkeit überwacht. So kann in einer anderen Variante der Erfindung vorgesehen sein, dass der Zeitgeber seine Zeitgeber-Uhr und/oder der Zeitnehmer seine Zeitnehmer-Uhr auf zeitliche Sprünge und/oder zeitlichen Drift und/oder Stehenbleiben überwachen. Wenn der Zeitgeber oder der Zeitnehmer bei ihrer jeweiligen Uhr einen zeitlichen Fehler feststellen, zum Beispiel zeitliche Sprünge, Drift und/oder Stehenbleiben, können sie die jeweils andere Komponente von Zeitgeber und Zeitnehmer über den zeitlichen Fehler informieren, kann also der Zeitgeber den Zeitnehmer oder der Zeitnehmer den Zeitgeber über den zeitlichen Fehler informieren. So kann beispielsweise der Zeitnehmer dem Zeitgeber eine Nachricht senden, dass ein zeitlicher Fehler aufgetreten ist, beispielsweise seine Zeitnehmer-Uhr stehen geblieben ist. Dann kann der Zeitgeber beispielsweise eine erneute Synchronisation starten, indem er eine Zeitsynchronisationsnachricht an den Zeitnehmer sendet.

Es ist vorteilhaft vorgesehen, dass der Zeitgeber oder eine den Zeitgeber enthaltende Vorrichtung des Systems Meldenachrichten des Zeitnehmers oder einer den Zeitnehmer enthaltenen Vorrichtung des Systems verwirft oder nicht beachtet, wenn der Zeitnehmer einen zeitlichen Fehler signalisiert.

Bei einer weiteren Variante der Erfindung ist vorgesehen, dass der Zeitnehmer anhand der Zeitnehmer-Uhr überprüft, ob die in einer jeweiligen Zeitsynchronisationsnachricht angegebene Zeitgeber-Zeitangabe innerhalb eines Toleranzbereiches liegt und/oder plausibel ist. So kann beispielsweise auf diesem Wege, welches man auch als Leap-Monitoring bezeichnen kann, vom Zeitnehmer erkannt werden, dass er eine Zeitsynchronisationsnachricht nicht erhalten hat.

Vorteilhaft ist es weiterhin, wenn die Zeitsynchronisationsnachricht und/oder die Zeitrücksynchronisationsnachricht mit einem Überprüfungscode versehen sind, insbesondere sozusagen abgesichert werden. Der Überprüfungscode kann beispielsweise ein Cyclic-Redundancy-Check-Code sein. Selbst wenn ein derartiger Überprüfungscode die Zeitsynchronisationsnachricht oder Zeitrücksynchronisationsnachricht verlängern, wird dadurch die Qualität der Zeiteinstellung verbessert.

Das erfindungsgemäße Verfahren ist skalierbar. Auch die Richtung, in welche die Zeitsynchronisation erfolgt, kann sozusagen frei gewählt sein. Ein Konzept sieht beispielsweise vor der Zeitnehmer einen Zeitgeber für mindestens einen weiteren Unter-Zeitnehmer bildet, wobei der Zeitnehmer die Verfahrensschritte des Zeitgebers gemäß der obigen Erläuterungen bezüglich des Unter-Zeitnehmers ausführt und der Unter-Zeitnehmer die Verfahrensschritte des Zeitnehmers gemäß der obigen Erläuterungen ausführt. Somit kann also beispielsweise der Zeitnehmer sozusagen als Zeitgeber für den Unter-Zeitnehmer dienen und diesem die Zeitsynchronisationsnachricht senden, während der Unter-Zeitnehmer diesem Zeitgeber die Zeitrücksynchronisationsnachricht sendet. Ohne weiteres ist eine derartige Vorgehensweise auch bezüglich weiterer Unter-Zeitnehmer realisierbar, sodass sozusagen eine Zeitgeber-Zeitnehmer-Kaskade möglich ist. Dabei bildet der jeweilige Zeitgeber mit dem Zeitnehmer oder den Zeitnehmern, den oder die der jeweilige Zeitgeber synchronisiert, jeweils eine Zeit-Domäne.

Es ist ferner vorteilhaft, wenn ein jeweiliger Zeitgeber eine Zeitnehmer-Überwachungsuhr für einen jeweiligen Zeitnehmer aufweist, der vom Zeitgeber anhand der mindestens einen Zeitsynchronisationsnachricht synchronisiert wird. Die Einstellung der Zeitnehmer-Überwachungsuhr kann die mindestens eine Folgeaktion bilden.

So ist vorteilhaft vorgesehen, dass der Zeitgeber mindestens eine Zeitnehmer-Überwachungsuhr aufweist, wobei der Zeitgeber die Zeitnehmer-Überwachungsuhr anhand der Zeitnehmer-Zeitangabe der Zeitrücksynchronisationsnachricht stellt, sodass die Zeitnehmer-Überwachungsuhr eine mit der Zeitnehmer-Uhr des Zeitnehmers korrespondierende Uhrzeit aufweist. Besonders bevorzugt ist es, wenn der Zeitgeber vom mehrere von ihm synchronisierte Zeitnehmer, vorzugsweise für alle von ihm synchronisierte Zeitnehmer, jeweils eine Zeitnehmer-Überwachungsuhr aufweist, die der Zeitgeber anhand der vom jeweiligen Zeitnehmer erhaltenen Zeitsynchronisationsnachrichten stellt. Somit ist also der Zeitgeber sozusagen stets darüber im Bilde, welche Uhrzeit bei dem mindestens einen von ihm synchronisierten Zeitnehmer eingestellt ist. Es versteht sich, dass eine Vorrichtung des Systems, die die Funktion eines Zeitgebers für einen oder mehrere Zeitnehmer leistet und für einen oder mehrere, vorzugsweise alle dieser Zeitnehmer, jeweils eine Zeitnehmer-Überwachungsuhr aufweist auch die Rolle eines Zeitnehmers einnehmen kann, der durch einen weiteren Zeitgeber des Systems synchronisiert wird.

Nachfolgend wird ein Ausführungsbeispiel der Erfindung anhand der Zeichnung erläutert. Es zeigen:
- Figur 1: eine schematische hierarchische Ansicht eines erfindungsgemäßen Systems,
- Figur 2: das System gemäß Figur 1 in einer Einbausituation in einem Kraftfahrzeug,

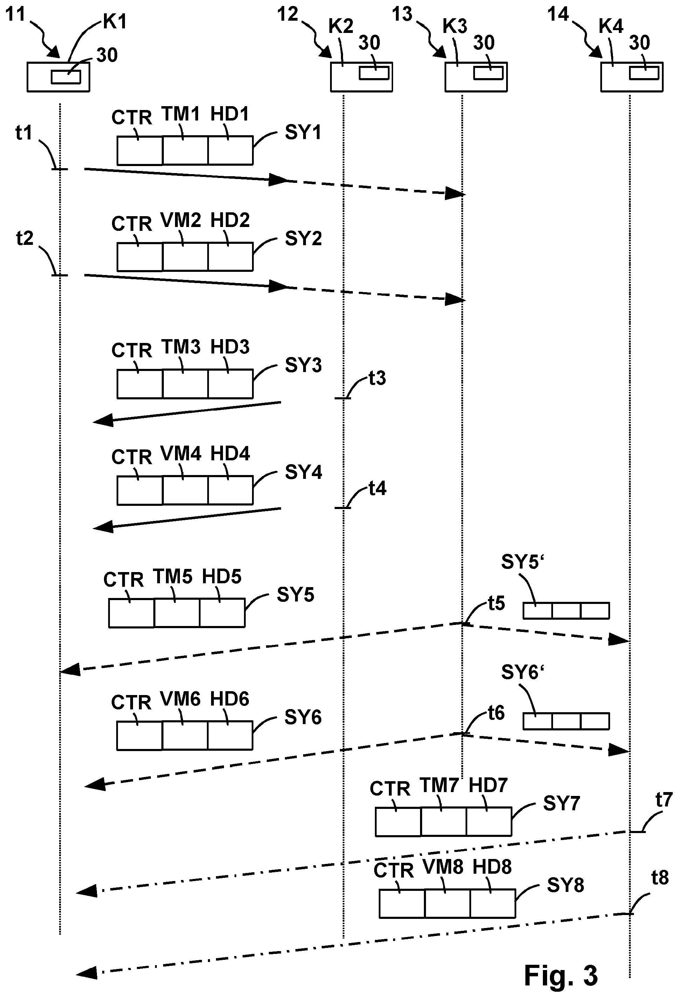

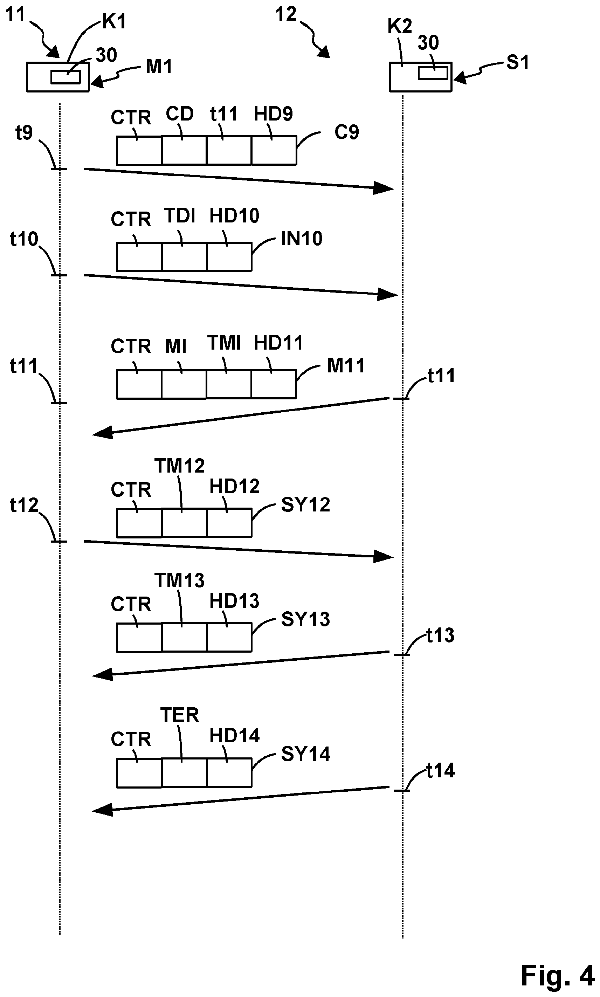

- Figur 3: einen Ablauf einer zeitlichen Synchronisation des Systems gemäß Figuren 1 und 2, und
- Figur 4: eine weitere Kommunikation in dem System gemäß Figuren 1 und 2.

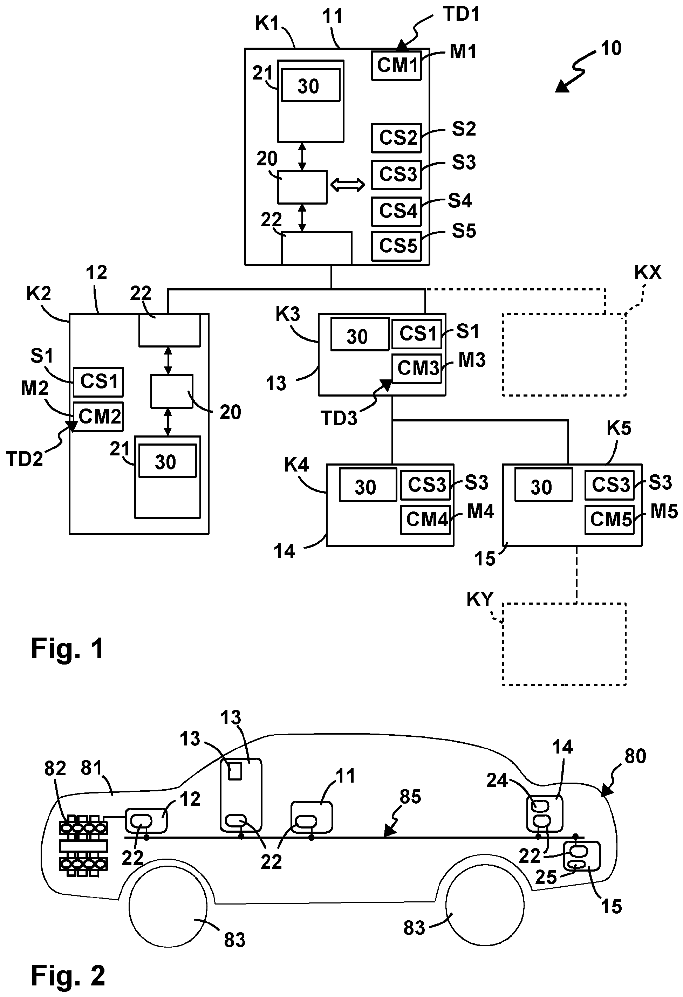

Ein System 10 gemäß der Zeichnung umfasst Vorrichtungen 11, 12, 13, 14, 15, welches in Figur 1 in einer hierarchischen Darstellung dargestellt ist, in Figur 2 in einer physikalischen Anordnung in einem Kraftfahrzeug 80. Das Kraftfahrzeug 80 ist ein Kraftfahrzeug, zum Beispiel einen Personenkraftwagen. Das Kraftfahrzeug 80 weist einen Motor 82, beispielsweise einen Verbrennungsmotor und/oder Elektromotor, auf. Der Motor 82 ist ebenso wie die Vorrichtungen 11, 12, 13, 14, 15 in einer Karosserie 81 des Kraftfahrzeugs 80 aufgenommen, welches Räder 83 aufweist, von denen beispielsweise die Vorderräder 83 durch den Motor 82 angetrieben sind.

Die Vorrichtungen 11, 12, 13, 14, 15 kommunizieren über einen Bus 85 des Kraftfahrzeugs 80 miteinander.

Die Vorrichtung 11 ist beispielsweise ein Steuergerät Fahrstabilisierung des Kraftfahrzeugs 80 und/oder zu dessen autonomer Steuerung, also zu einem zumindest teilweise automatisierten Fahren. Die Vorrichtung 12 ist beispielsweise ein Motorsteuergerät zur Ansteuerung des Motors 82. Die Vorrichtungen 13, 14 und 15 sind oder umfassen beispielsweise Sensoren. Beispielsweise weist die Vorrichtung 13 einen Sensor 23 in Gestalt einer Kamera, die Vorrichtung 14 einen Sensor 24 in Gestalt eines Gyrosensors und die Vorrichtung 15 einen Sensor 25 in Gestalt eines Radarsensors auf.

Die Vorrichtungen 11-15 weisen jeweils einen Prozessor 20 sowie Speicher 21 auf, wobei der Prozessor 20 über ein Kommunikationsmodul 22, zum Beispiel einen sogenannten Buskoppler, mit dem Bus 85 verbunden ist und zum Versenden und Empfangen von Busnachrichten über den Bus 85 ausgestaltet ist.

Die Vorrichtung 11 bildet einen Knoten K1 des Systems 10, an die Vorrichtungen 12, 13 als Knoten K2 und K3 angeschlossen sind. An den Knoten K1 können auch weitere Knoten angeschlossen sein, von denen beispielhaft ein Knoten KX angedeutet ist.

An den Knoten K3 sind wiederum die Vorrichtungen 14 und 15 als Knoten K4 und K5 angeschlossen.

Weitere hierarchisch weiter unten liegende Knoten oder Systemkomponenten sind ohne weiteres möglich, so zum Beispiel ein Knoten KY, der an den Knoten K5 angeschlossen ist.

Wie erläutert können die Vorrichtungen 10 bis 15 über einen gemeinsamen Bus 85 miteinander kommunizieren. Es ist aber auch möglich, dass beispielsweise zwischen den Vorrichtungen 11, 12 und 13 sowie gegebenenfalls dem Knoten KX ein erster Kommunikationsbus und zwischen den Vorrichtungen 14, 15 bzw. Knoten K4 und K5 ein zweiter, von dem ersten Kommunikationsbus verschiedener Kommunikationsbus oder Übertragungsweg vorgesehen ist.

Exemplarisch für die Vorrichtungen 12, 13, 14, 15 sind nur bei der Vorrichtung 12 ein Prozessor 20, ein Speicher 21 sowie ein Kommunikationsmodul 22 dargestellt. Ohne weiteres weisen diese Vorrichtungen 13-15 ebenfalls Prozessoren 20, Speicher 21 sowie ein Kommunikationsmodul 22 auf.

Des Weiteren weisen die Vorrichtungen 11, 12, 13, 14, 15 jeweils ein Zeitmodul 30 auf, welches Programmcode aufweist, der durch den Prozessor 20 der Vorrichtungen 11, 12, 13, 14, 15 ausführbar ist, wobei die Zeitmodule 30 im jeweiligen Speicher 21 der Vorrichtungen 11, 12, 13, 14, 15 gespeichert sind.

Die Vorrichtung 11 oder Knoten K1 bildet einen Zeit-Master oder Zeitgeber M1 des Systems 10, der die Vorrichtungen 11, 12 oder Knoten K2, K3 synchronisiert, die Zeitnehmer S1 in Bezug auf den Zeitgeber M1 bilden. Die Zeitnehmer S1, also die Knoten K2, K3, sowie der Knoten K1 als Zeitgeber M1 bilden eine Zeitdomäne TD1.

Eine Synchronisation der Zeitnehmer S1 durch den Knoten K1 oder Zeitgeber M1 verläuft beispielsweise wie folgt:
Der Zeitgeber M1 sendet zu einem Zeitpunkt t1 eine Zeitsynchronisationsnachricht SY1 an die Zeitnehmer S1. Die Zeitsynchronisationsnachricht SY1 enthält beispielsweise einen Kopf oder Header HD, eine Zeitgeber-Zeitangabe TM1, sowie einen Überprüfungscode CTR, anhand dessen die Zeitnehmer S1 die Zeitsynchronisationsnachricht SY1 überprüfen können.

Der Header HD1 dient beispielsweise zur Adressierung der Zeitnehmer S1. Ohne weiteres kann die Zeitsynchronisationsnachricht SY1, insbesondere der Header HD1 weitere Informationen enthalten, beispielsweise eine Information über die Zeitdomäne T1, eine Sequenznummer, die anzeigt, dass die Zeitsynchronisationsnachricht SY eine erste Nachricht einer Synchronisationssequenz ist oder dergleichen.

Das Zeitmodul 30 des Zeitgebers M1 ermittelt und erzeugt die Zeitgeber-Zeitangabe TM1 anhand einer Zeitgeber-Uhr CM1 des Zeitgebers M1.

Der Zeitgeber M1 sendet zu einem Zeitpunkt t2 nach der Zeitsynchronisationsnachricht SY1 optional noch eine Versandzeitinformationsnachricht SY2 mit einem Header HD2 sowie einem Überprüfungscode CTR zur Überprüfung der Versandzeitinformationsnachricht SY2 durch die Zeitnehmer S1. Zudem enthält die Versandzeitinformationsnachricht SY2 eine Versandzeitpunktangabe VM2 über den Zeitpunkt des Versands der Zeitsynchronisationsnachricht SY1.

Anhand der Zeitgeber-Zeitangabe TM1 und optional der Versandzeitpunktangabe VM2 stellen die Zeitmodule 30 der Knoten K2, K3 bzw. Zeitnehmer S1 die Zeitnehmer-Uhren CS1.

Nachfolgend wird eine Rücksynchronisation oder Rückkoppelung der Knoten K1, K2 Beziehungsseite Zeitnehmer S1 bezüglich des Zeitgebers M1 erläutert.

Die Knoten K2, K3 bilden nämlich Zeitgeber M2, M3 bezüglich des Knotens K1, der in Relation zu den Zeitgeber M2, M3 Zeitnehmer S2, S3 bildet. Der Knoten K1 weist für jeden der Knoten K2, K3 eine Zeitnehmer-Uhr CS2, CS3 auf, die eine Zeitnehmer-Überwachungsuhr darstellt.

Beispielhaft für die Zeitgeber M2, M3 wird nachfolgend die Rücksynchronisation durch den Zeitgeber M2 erläutert.

Der Zeitgeber M2 sendet zu einem Zeitpunkt t3 eine Zeitrücksynchronisationsnachricht SY3 mit einem Header HD3, einer Zeitnehmer-Zeitangabe TM3 sowie einem Überprüfungscode CTR, wobei der Header HD3 und der Überprüfungscode CTR beispielsweise funktional dem Header HD1 und dem Überprüfungscode CTR entsprechen. Die Zeitnehmer-Zeitangabe TM3 ist anhand der Zeitnehmer-Uhr CS1 erzeugt und repräsentiert deren aktuelle Zeit. Die Zeitnehmer-Zeitangabe TM3 kann auch anhand einer Zeitgeber-Uhr CM2 erzeugt sein, die dem Zeitgeber M2 zugeordnet ist und beispielsweise synchron mit der Zeitnehmer-Uhr CS1 oder analog zur Zeitnehmer-Uhr CS 1 eingestellt ist.

Zu einem Zeitpunkt t4 sendet der Zeitgeber M2 optional eine Versandzeitinformationsnachricht SY4, die grundsätzlich und funktional der Versandzeitinformationsnachricht SY2 entspricht, also beispielsweise einen dem Header HD2 entsprechenden Header HD4 sowie einen Überprüfungscode CTR und eine Versandzeitpunktangabe VM4 aufweist, die analog zur Versandzeitpunktangabe VM2 den Zeitpunkt des Versands der Zeitrücksynchronisationsnachricht SY3 angibt. Anhand der Versandzeitpunktangabe VM4 sowie der Zeitnehmer-Zeitangabe TM3 stellt der Knoten K1, insbesondere das Zeitmodul 30, die dem Zeitgeber M2 zugeordnete Zeitnehmer-Uhr CS2 ein. Somit bildet der Zeitgeber M2 mit dem Zeitnehmer S2 eine Zeitdomäne TD2.

Der Knoten K3 bildet einen Zeitgeber M3 einer Zeitdomäne TD3, die mehrere Zeitnehmer S3 aufweist, nämlich einen Zeitnehmer S3 beim Knoten K1 sowie weitere Zeitnehmer S3 bei den Knoten K4 und K5.

In der oben beschriebenen Weise ist es möglich, dass der Knoten K3 bzw. sein Zeitmodul 30 zur Realisierung des Zeitgebers M3 anhand der Zeitnehmer-Uhr CS1 oder einer damit synchronisierten oder davon abhängigen Zeitgeber-Uhr CM3 zu einem Zeitpunkt t5 eine Zeitrücksynchronisationsnachricht SY5 sowie zu einem Zeitpunkt t6 eine Versandzeitinformationsnachricht SY6 an den Knoten K1 senden, die Header HD5 und HD6, Überprüfungscode CTR sowie eine Zeitnehmer-Zeitangabe TM5 und eine Versandzeitpunktangabe VM6 aufweisen, anhand derer der Knoten K1 insbesondere das Zeitmodul 30, eine dem Knoten K3 in seiner Funktion als Zeitgeber M3 zugeordnete Zeitnehmer-Uhr CS3 einstellen.

Weiterhin sind die Knoten K4 und K5 Zeitnehmer S3 in Bezug auf den Knoten K3 bzw. den Zeitgeber M3. Zeitmodule 30 der Knoten K4, K5 weisen dem Zeitgeber M3 zugeordnete Zeitnehmer-Uhren CS3 auf.

Beispielsweise sendet der Knoten K3 oder Zeitgeber M3 die Zeitrücksynchronisationsnachricht SY5 oder eine dieser im wesentlichen entsprechende Zeitsynchronisationsnachricht SY5' an den Knoten K4 und den Knoten K5, welche ihre dem Zeitgeber M3 zugeordnete Zeitnehmer-Uhren CS3 aufweisen, die die Zeitnehmer S3 oder Knoten K4, K5 anhand der Zeitrücksynchronisationsnachricht SY5, die in Bezug auf die Knoten K4 und K5 im Grunde genommen eine Zeitsynchronisationsnachricht darstellt, sowie der Versandzeitinformationsnachricht SY6 einstellen.

Die Knoten K4 und K5 können jedoch nicht nur Zeitnehmer sein, sondern auch Zeitgeber, also beispielsweise Zeitgeber M4 und M5. In ihrer Funktion als Zeitgeber M4 und M5 weisen die Knoten K4 und K5 Zeitgeber-Uhren CM4 und CM5 auf. Knoten K1 weist Zeitnehmer S4 und S5 auf, die durch die Zeitgeber M4 und M5 synchronisierbar sind.

Wenn die Zeitgeber M4 und M5 die Zeitnehmer S4 und S5 des Knotens K1 sozusagen synchronisieren, ist eine Rücksynchronisierung des Knotens K1 durch die Zeitnehmer S4 und S5 realisierbar. Mithin synchronisieren also die Knoten K2, K3, K4 und K5 den Knoten K1 bzw. Uhren, die der Knoten K1 für die Knoten K2-K5 führt und überwacht.

Anhand der Zeitgeber-Uhren CM4 und CM5 oder daraus erzeugter Zeitinformationen senden die Zeitgeber M4 und M5 Zeitsynchronisationsnachrichten an den Knoten K1, sodass dessen Zeitmodule 30 die Zeitgeber-Uhren CM4 und CM5 einstellen können.

Beispielsweise sendet der Zeitgeber M4 zu Zeitpunkten t7 und t8 bezüglich des Knotens K1, der ja den Zeitgeber M1 darstellt, eine Zeitsynchronisationsnachricht SY7, die man auch als Zeitrücksynchronisationsnachricht bezeichnen kann, sowie eine Versandzeitinformation SY8, die in erläuterter Weise Header HD7 und HD8 zur Adressierung des Knotens K1 sowie Überprüfungscodes CTR aufweisen, sowie zudem in der Zeitsynchronisationsnachricht SY7 eine Zeitgeber-Zeitangabe TM7 sowie eine Versandzeitpunktangabe VM8 in der Versandzeitinformationsnachricht SY8 enthalten. Eine vom Knoten K5 versendete Zeitsynchronisationsnachricht sowie eine ebenfalls von diesem Versenden der Versandzeitinformationsnachricht sind in der Zeichnung aus Gründen der Vereinfachung nicht dargestellt. Das Zeitmodul 30 des Knotens K1 stellt den Zeitgebern M4 und M5 zugeordnete Zeitnehmer-Uhren CS4 und CS5 anhand der Zeitsynchronisationsnachricht SY und der nicht dargestellten Zeitsynchronisationsnachricht, die man auch als Zeitrücksynchronisationsnachricht betrachten kann, sowie der Versandzeitinformationsnachricht SY8 und der nicht dargestellten Versandzeitinformationsnachricht des Knotens K5 bzw. des Zeitgebers M5 die Zeitnehmer-Uhren CS4 und CS5 ein.

Im Zusammenhang mit der Synchronisation der Knoten K1-K5 und/oder infolge der Synchronisation ein der Rücksynchronisation, ergeben sich folgende beispielhafte Situationen:
Beispielsweise überprüft der Zeitgeber M1 anhand eines Vergleichs der Zeitgeber-Uhr CM1 mit einer der Zeitnehmer-Uhren CS2, CS3, CS4 oder CS5, ob diese in einem zeitlichen Toleranzbereich bezüglich der Zeitgeber-Uhr CM1 sind. Dazu vergleicht beispielsweise der Zeitgeber M1, insbesondere das Modul 30, die jeweilige an der Zeitgeber-Uhr CM1 vorhandene Uhrzeit mit der Uhrzeit der jeweiligen Zeitnehmer-Uhr CS2, CS3, CS4 oder CS5.

Ohne weiteres möglich ist es aber auch, dass der Zeitgeber M1 bzw. das Zeitmodul 30 die an der Zeitgeber-Uhr CM1 vorhandene Uhrzeit TCM1 mit der im Rahmen der Zeitrücksynchronisationsnachricht SY3 erhaltenen Zeitnehmer-Zeitangabe TM3 vergleicht, beispielsweise eine Zeit-Differenz TDI = TCM1-TM3 bildet.

Der Knoten K1 sendet beispielsweise eine Informationsnachricht IN10 mit einem Header HD10, einem Überprüfungscode CTR sowie der Zeit-Differenz TDI, also einer Information, ob die Zeitnehmer Uhr CS1 sich innerhalb eines zeitlichen Toleranzbereichs bezüglich der Zeitgeber Uhr CM1 befindet. Kann in dem Wert für die Zeit-Differenz TDI ein Wert für ungültig stehen, wenn die Zeit-Differenz TDI außerhalb eines zeitlichen Toleranzbereiches liegt.

Wenn die Differenz TCM1 - TM3 kleiner als ein Grenzwert Tmax ist, sendet der Knoten K1 zu einem Zeitpunkt t9 beispielsweise eine Steuernachricht C9 an den Knoten K2, die einen Header HD9, einen Überprüfungscode CTR sowie einen Steuerbefehl CD enthält.

Der Steuerbefehl CD steuert den Knoten K2 beispielsweise dazu an, zu einem Zeitpunkt t11, der in der Steuernachricht C9 enthalten ist, eine Meldenachricht M11 zu versenden, die einen Header HD11, einen Überprüfungscode CTR sowie eine Meldeinformation MI sowie den Erfassungszeitpunkt TMI der Meldeinformation MI enthält. Wenn der Erfassungszeitpunkt TMI mit einem ungültigen Wert angegeben wird, ist dies beispielsweise ein Signal für den Knoten K1, dass die Meldeinformation MI außerhalb eines zeitlichen Toleranzbereichs bezüglich der Zeitgeber-Uhr CM1 erfasst worden ist. Somit kann der Knoten K1 erkennen, dass die Meldeinformation MI ungültig und nicht verwertbar ist.

Zur Verdeutlichung, dass eine Zeitsynchronisation und Zeit Rücksynchronisation vorteilhaft wiederholt wird, sind die Zeitsynchronisationsnachricht SY12 und die Zeit Rücksynchronisation SY13 dargestellt, die Header HD12 und HD13 und Überprüfungscodes CTR enthalten.

Beispielsweise sendet der Zeitgeber M1 zu einem Zeitpunkt t12 die Zeitsynchronisationsnachricht SY12 mit einer anhand der Zeitgeber Uhr CM1 erzeugten Zeitgeber-Zeitangabe TM12, wobei der Zeitpunkt t12 einen Periodenabstand oder Zyklusabstand zu dem Zeitpunkt t1 aufweist.

Die Zeitrücksynchronisationsnachricht SY13 enthält eine Zeitnehmer-Zeitangabe TM13, die anhand der Zeitnehmer-Uhr CS1 erzeugt ist.

Wenn der Zeitnehmer S1 nicht innerhalb eines zeitlichen Fensters, in dem der Zeitpunkt t12 liegt, d. h. nicht innerhalb einer gewissen Periodenzeit oder Zykluszeit weitere Zeitsynchronisationsnachrichten vom Zeitgeber M1 erhöht, sendet der Zeitnehmer S1 beispielsweise eine Meldenachricht SY14 mit einem Header HD14, einem Überprüfungscode CTR sowie einer Information TER, die eine fehlerhafte Zeitsynchronisation oder mangelhafte Zeitsynchronisation signalisiert, an den Zeitgeber M1. Der Zeitnehmer S1 prüft also, ob er innerhalb einer vorbestimmten Zykluszeit durch den Zeitgeber M1 synchronisiert wird.

## Patentansprüche

1. Verfahren zu einer Zeitsynchronisation in einem System (10), umfassend einen Zeitgeber (M1, M2) sowie mindestens einen Zeitnehmer (S1, S2), wobei der Zeitgeber eine Zeitgeber-Uhr (CM1, CM2) aufweist und der Zeitnehmer (S1, S2) eine Zeitnehmer-Uhr (CS1, CS2) aufweist, wobei der Zeitgeber (M1, M2) eine Zeitsynchronisationsnachricht (SY1) mit einer anhand der Zeitgeber-Uhr (CM1, CM2) erzeugten Zeitgeber-Zeitangabe (TM1) zur Synchronisierung der Zeitnehmer-Uhr (CS1, CS2) mit der Zeitgeber-Uhr (CM1, CM2) an den Zeitnehmer (S1, S2) sendet, wobei der Zeitnehmer (S1, S2) anhand der Zeitgeber-Zeitangabe (TM1) der Zeitsynchronisationsnachricht (SY1) seine Zeitnehmer-Uhr (CS1, CS2) einstellt, wobei der Zeitnehmer (S1, S2) an den Zeitgeber (M1, M2) eine Zeitrücksynchronisationsnachricht (SY3) mit mindestens einer Zeitnehmer-Zeitangabe (TM3) sendet, wobei die Zeitrücksynchronisationsnachricht (SY3) anhand der durch die Zeitgeber-Zeitangabe (TM1) der Zeitsynchronisationsnachricht (SY1) eingestellten Zeitnehmer-Uhr (CS1, CS2) erzeugt ist, und wobei der Zeitgeber (M1, M2) mindestens eine Folgeaktion anhand eines Vergleichs der Zeitnehmer-Zeitangabe (TM3) mit einer Zeitinformation der Zeitgeber-Uhr (CM1, CM2) erzeugt, **dadurch gekennzeichnet, dass** der Zeitgeber (M1, M2) überprüft, ob er nach dem Versenden einer Zeitsynchronisationsnachricht (SY1) an den Zeitnehmer (S1, S2) innerhalb einer vorbestimmten Zeit eine Zeitrücksynchronisationsnachricht (SY3) von dem Zeitnehmer (S1, S2) erhält, der die Zeitsynchronisationsnachricht (SY1) empfangen hat, und/oder dass der Zeitgeber (M1, M2) seine Zeitgeber-Uhr (CM1, CM2) und/oder der Zeitnehmer (S1, S2) seine Zeitnehmer-Uhr (CS1, CS2) auf zeitliche Sprünge und/oder zeitlichen Drift und/oder Stehenbleiben überwachen und/oder dass der Zeitnehmer (S1, S2) anhand der Zeitnehmer-Uhr (CS1, CS2) überprüft, ob die in einer jeweiligen Zeitsynchronisationsnachricht (SY1) angegebene Zeitgeber-Zeitangabe (TM1) innerhalb eines Toleranzbereiches liegt und/oder plausibel ist.

2. Verfahren nach Anspruch 1, **dadurch gekennzeichnet, dass** die mindestens eine Folgeaktion eine Überprüfung umfasst, ob die Zeitnehmer-Uhr (CS1, CS2) in einem zeitlichen Toleranzbereich bezüglich der Zeitgeber-Uhr (CM1, CM2) arbeitet.

3. Verfahren nach Anspruch 1 oder 2, **dadurch gekennzeichnet, dass** die mindestens eine Folgeaktion umfasst, dass der Zeitgeber (M1, M2) einen Steuerbefehl (CD) an den Zeitnehmer (S1, S2) in Abhängigkeit von der Zeitnehmer-Zeitangabe (TM3) der Zeitrücksynchronisationsnachricht (SY3) versendet, wobei vorteilhaft vorgesehen ist, dass der Zeitgeber (M1, M2) den Steuerbefehl (CD) in Abhängigkeit davon an den Zeitnehmer (S1, S2) sendet oder nicht sendet, ob die Zeitnehmer-Uhr (CS1, CS2) in einem vorgegebenen zeitlichen Toleranzbereich bezüglich der Zeitgeber-Uhr (CM1, CM2) arbeitet, und/oder dass der Zeitgeber (M1, M2) einen Sendezeitpunkt des Steuerbefehls abhängig von einer Zeit-differenz zwischen der Zeitgeber-Uhr (CM1, CM2) und der Zeitnehmer-Uhr (CS1, CS2) wählt und/oder einen Ausführungszeitpunkt zur Ausführung des Steuerbefehls in Abhängigkeit von einer Zeitdifferenz zwischen der Zeitgeber-Uhr (CM1, CM2) und der Zeitnehmer-Uhr (CS1, CS2) in dem Steuerbefehl angibt.

4. Verfahren nach einem der vorhergehenden Ansprüche, **dadurch gekennzeichnet, dass** die mindestens eine Folgeaktion umfasst, dass der Zeitgeber (M1, M2) dem Zeitnehmer (S1, S2) eine Information (TDI) darüber sendet, ob sich die Zeitnehmer-Uhr (CS1, CS2) innerhalb eines zeitlichen Toleranzbereichs bezüglich der Zeitgeber-Uhr (CM1, CM2) befindet und/oder die Zeitnehmer-Uhr (CS1, CS2) eine von dem Zeitnehmer (S1, S2) akzeptierte, gültige Zeit aufweist.

5. Verfahren nach einem der vorhergehenden Ansprüche, **dadurch gekennzeichnet, dass** der Zeitnehmer (S1, S2) Meldenachrichten (M11) nur dann an den Zeitgeber (M1, M2) sendet, wenn die Zeitnehmer-Uhr (CS1, CS2) innerhalb des zeitlichen Toleranzbereichs bezüglich der Zeitgeber-Uhr (CM1, CM2) ist und/oder eine von dem Zeitgeber (M1, M2) akzeptierte, gültige Zeit aufweist, und/oder dass der Zeitnehmer (S1, S2) Meldenachrichten (M11) an den Zeitgeber (M1, M2) mit einer Information versieht, die angibt, ob die Zeitnehmer-Uhr (CS1, CS2) innerhalb des zeitlichen Toleranzbereichs ist und/oder die gültige Zeit aufweist.

6. Verfahren nach einem der vorhergehenden Ansprüche, **dadurch gekennzeichnet, dass** die mindestens eine Folgeaktion umfasst, dass der Zeitgeber (M1, M2) dem Zeitnehmer (S1, S2) mindestens eine weitere Zeitsynchronisationsnachricht (SY12) zur Synchronisation der Zeitnehmer-Uhr (CS1, CS2) sendet, wobei die weitere Zeitsynchronisationsnachricht (SY12) eine Zeitinformation zur Verringerung einer zeitlichen Abweichung zwischen der Zeitnehmer-Uhr (CS1, CS2) und der Zeitgeber-Uhr (CM1, CM2) enthält, wobei vorteilhaft vorgesehen ist, dass der Zeitnehmer (S1, S2) überprüft, ob er innerhalb eines vorbestimmten zeitlichen Abstandes und/oder innerhalb einer vorbestimmten Zykluszeit Zeitsynchronisationsnachrichten (SY1) von dem Zeitgeber (M1, M2) erhält, und/oder dass der Zeitnehmer (S1, S2) nach Erhalt der mindestens einen weiteren Zeitsynchronisationsnachricht (SY1) mindestens eine weitere Zeitrücksynchronisationsnachricht (SY13) mit mindestens einer Zeitnehmer-Zeitangabe (TM13), die anhand der durch die Zeitgeber-Zeitangabe (TM1) in der mindestens einen weiteren Zeitsynchronisationsnachricht (SY1) eingestellten Zeitnehmer-Uhr (CS1, CS2) erzeugt ist, an den Zeitgeber (M1, M2) sendet, wobei der Zeitgeber (M1, M2) anhand eines Vergleichs dieser weiteren Zeitnehmer-Zeitangabe (TM13) mit einer Zeitinformation seiner Zeitgeber-Uhr (CM1, CM2) mindestens eine weitere Folgeaktion erzeugt.

7. Verfahren nach einem der vorhergehenden Ansprüche, **dadurch gekennzeichnet, dass** die Zeitsynchronisationsnachricht (SY1) und/oder die Zeitrücksynchronisationsnachricht (SY3) einen Überprüfungscode, insbesondere einen CRC-Code (CRC = Cyclic Redundancy Check) aufweisen.

8. Verfahren nach einem der vorhergehenden Ansprüche, **dadurch gekennzeichnet, dass** der Zeitnehmer (S1, S2) einen Zeitgeber (M1, M2) für mindestens einen weiteren Unter-Zeitnehmer (S1, S2) bildet, wobei der Zeitnehmer (S1, S2) die Verfahrensschritte des Zeitgebers (M1, M2) gemäß einem der vorhergehenden Ansprüche bezüglich des Unter-Zeitnehmers (S1, S2) ausführt und der Unter-Zeitnehmer (S1, S2) die Verfahrensschritte des Zeitnehmers (S1, S2) gemäß einem der vorhergehenden Ansprüche ausführt.

9. Verfahren nach einem der vorhergehenden Ansprüche, **dadurch gekennzeichnet, dass** der Zeitgeber (M1, M2) mindestens eine Zeitnehmer-Überwachungsuhr (CS2, CS3) aufweist, wobei der Zeitgeber (M1, M2) die Zeitnehmer-Überwachungsuhr (CS2, CS3) anhand der Zeitnehmer-Zeitangabe (TM3) der Zeitrücksynchronisationsnachricht (SY3) stellt, sodass die Zeitnehmer-Überwachungsuhr (CS2, CS3) eine mit der Zeitnehmer-Uhr (CS2, CS3) des Zeitnehmers (S1, S2) korrespondierende Uhrzeit aufweist, wobei vorteilhaft vorgesehen ist, dass der Zeitgeber (M1, M2) für jeden von ihm synchronisierten Zeitnehmer (S1, S2) eine Zeitnehmer-Überwachungsuhr (CS2, CS3) aufweist und die Zeitnehmer-Überwachungsuhren (CS2, CS3) anhand der vom jeweiligen Zeitnehmer (S1, S2) erhaltenen Zeitrücksynchronisationsnachrichten (SY3) stellt.

10. Verfahren nach einem der vorhergehenden Ansprüche, **dadurch gekennzeichnet, dass** die Zeitrücksynchronisationsnachricht (SY3) eine von Meldenachrichten des Zeitnehmers (S1, S2) separate Nachricht ist, die ausschließlich zur Rückmeldung der Zeitnehmer-Zeitangabe (TM3) an den Zeitgeber (M1, M2) dient, und/oder dass die Zeitsynchronisationsnachricht (SY1) entsprechend dem AUTOSAR-Standard oder dem IEEE-1588-Standard gebildet ist.

11. Verfahren nach einem der vorhergehenden Ansprüche, **dadurch gekennzeichnet, dass** der Zeitgeber (M1, M2) dem Zeitnehmer (S1, S2) nach dem Versenden der Zeitsynchronisationsnachricht (SY1) eine Versandzeitinformationsnachricht (SY2) sendet, die eine Versandzeitinformation (VM2) über den Zeitpunkt des Versands der Zeitsynchronisationsnachricht (SY1) enthält, wobei der Zeitnehmer (S1, S2) die Zeitnehmer-Uhr (CS1, CS2) anhand der Versandzeitinformation (VM2) die Zeitnehmer-Uhr (CS1, CS2) einstellen und/oder korrigieren kann und/oder dass der Zeitnehmer (S1, S2) dem Zeitgeber (M1, M2) nach dem Versenden der Zeitrücksynchronisationsnachricht (SY3) eine Versandzeitinformationsnachricht (SY4) sendet, die eine Versandzeitinformation (VM4) über den Zeitpunkt des Versands der Zeitrücksynchronisationsnachricht (SY3) enthält, wobei der Zeitgeber (M1, M2) eine dem Zeitnehmer (S1, S2) zugeordnete Zeitnehmer-Überwachungsuhr (CS2, CS3) anhand der Versandzeitinformation (VM4) einstellen und/oder korrigieren kann.

12. System (10) zur Zeitsynchronisation, wobei das System (10) einen Zeitgeber (M1, M2) sowie mindestens einen Zeitnehmer (S1, S2) umfasst, wobei der Zeitgeber (M1, M2) eine Zeitgeber-Uhr (CM1, CM2) aufweist und der Zeitnehmer (S1, S2) eine Zeitnehmer-Uhr (CS1, CS2) aufweist, wobei der Zeitgeber (M1, M2) Sendemittel zum Senden einer Zeitsynchronisationsnachricht (SY1) mit einer anhand der Zeitgeber-Uhr (CM1, CM2) erzeugten Zeitgeber-Zeitangabe (TM1) zur Synchronisierung der Zeitnehmer-Uhr (CS1, CS2) mit der Zeitgeber-Uhr (CM1, CM2) an den Zeitnehmer (S1, S2) aufweist, wobei der Zeitnehmer (S1, S2) Einstellmittel zum Einstellen seiner Zeitnehmer-Uhr (CS1, CS2) anhand der Zeitgeber-Zeitangabe (TM1) der Zeitsynchronisationsnachricht (SY1) aufweist, der Zeitnehmer (S1, S2) Sendemittel zum Senden einer Zeitrücksynchronisationsnachricht (SY3) (SY3) mit mindestens einer Zeitnehmer-Zeitangabe (TM3) an den Zeitgeber (M1, M2) aufweist, wobei die Zeitrücksynchronisationsnachricht (SY3) anhand der durch die Zeitgeber-Zeitangabe (TM1) der Zeitsynchronisationsnachricht (SY1) eingestellten Zeitnehmer-Uhr (CS1, CS2) erzeugt ist, und wobei der Zeitgeber (M1, M2) Erzeugungsmittel zum Erzeugen mindestens einer Folgeaktion anhand eines Vergleichs der Zeitnehmer-Zeitangabe (TM3) mit einer Zeitinformation der Zeitgeber-Uhr (CM1, CM2) aufweist, **dadurch gekennzeichnet, dass** der Zeitgeber (M1, M2) überprüft, ob er nach dem Versenden einer Zeitsynchronisationsnachricht (SY1) an den Zeitnehmer (S1, S2) innerhalb einer vorbestimmten Zeit eine Zeitrücksynchronisationsnachricht (SY3) von dem Zeitnehmer (S1, S2) erhält, der die Zeitsynchronisationsnachricht (SY1) empfangen hat, und/oder dass der Zeitgeber (M1, M2) seine Zeitgeber-Uhr (CM1, CM2) und/oder der Zeitnehmer (S1, S2) seine Zeitnehmer-Uhr (CS1, CS2) auf zeitliche Sprünge und/oder zeitlichen Drift und/oder Stehenbleiben überwachen und/oder dass der Zeitnehmer (S1, S2) anhand der Zeitnehmer-Uhr (CS1, CS2) überprüft, ob die in einer jeweiligen Zeitsynchronisationsnachricht (SY1) angegebene Zeitgeber-Zeitangabe (TM1) innerhalb eines Toleranzbereiches liegt und/oder plausibel ist.

## Claims

1. Method for time synchronization in a system (10), comprising a time master (M1, M2) and at least one time slave (S1, S2), wherein the time master has a time master clock (CM1, CM2) and the time slave (S1, S2) has a time slave clock (CS1, CS2), wherein the time master (M1, M2) transmits to the time slave (S1, S2) a time synchronization message (SY1) with a time master time indication (TM1) - generated on the basis of the time master clock (CM1, CM2) - for synchronizing the time slave clock (CS1, CS2) with the time master clock (CM1, CM2), wherein the time slave (S1, S2) sets its time slave clock (CS1, CS2) on the basis of the time master time indication (TM1) of the time synchronization message (SY1), wherein the time slave (S1, S2) transmits to the time master (M1, M2) a time back-synchronization message (SY3) with at least one time slave time indication (TM3), wherein the time back-synchronization message (SY3) is generated on the basis of the time slave clock (CS1, CS2) set by means of the time master time indication (TM1) of the time synchronization message (SY1), and wherein the time master (M1, M2) generates at least one follow-up action on the basis of a comparison of the time slave time indication (TM3) with time information of the time master clock (CM1, CM2), **characterized in that** the time master (M1, M2) checks whether, after sending a time synchronization message (SY1) to the time slave (S1, S2), the time master obtains within a predetermined time a time back-synchronization message (SY3) from the time slave (S1, S2) that received the time synchronization message (SY1), and/or **in that** the time master (M1, M2) monitors its time master clock (CM1, CM2) and/or the time slave (S1, S2) monitors its time slave clock (CS1, CS2) for temporal jumps and/or temporal drift and/or stopping and/or **in that** the time slave (S1, S2) checks on the basis of the time slave clock (CS1, CS2) whether the time master time indication (TM1) indicated in a respective time synchronization message (SY1) is within a tolerance range and/or is plausible.

2. Method according to Claim 1, **characterized in that** the at least one follow-up action comprises a check as to whether the time slave clock (CS1, CS2) is operating in a temporal tolerance range with respect to the time master clock (CM1, CM2).

3. Method according to Claim 1 or 2, **characterized in that** the at least one follow-up action comprises the time master (M1, M2) sending a control command (CD) to the time slave (S1, S2) depending on the time slave time indication (TM3) of the time back-synchronization message (SY3), wherein it is advantageously provided that the time master (M1, M2) transmits or does not transmit the control command (CD) to the time slave (S1, S2) depending on whether the time slave clock (CS1, CS2) is operating in a predefined temporal tolerance range with respect to the time master clock (CM1, CM2), and/or that the time master (M1, M2) selects a transmission instant of the control command depending on a time difference between the time master clock (CM1, CM2) and the time slave clock (CS1, CS2) and/or indicates an execution instant for executing the control command depending on a time difference between the time master clock (CM1, CM2) and the time slave clock (CS1, CS2) in the control command.

4. Method according to any of the preceding claims, **characterized in that** the at least one follow-up action comprises the time master (M1, M2) transmitting to the time slave (S1, S2) information (TDI) about whether the time slave clock (CS1, CS2) is within a temporal tolerance range with respect to the time master clock (CM1, CM2) and/or the time slave clock (CS1, CS2) has a valid time accepted by the time slave (S1, S2).

5. Method according to any of the preceding claims, **characterized in that** the time slave (S1, S2) transmits reporting messages (M11) to the time master (M1, M2) only if the time slave clock (CS1, CS2) is within the temporal tolerance range with respect to the time master clock (CM1, CM2) and/or has a valid time accepted by the time master (M1, M2), and/or **in that** the time slave (S1, S2) provides reporting messages (M11) to the time master (M1, M2) with information indicating whether the time slave clock (CS1, CS2) is within the temporal tolerance range and/or has the valid time.

6. Method according to any of the preceding claims, **characterized in that** the at least one follow-up action comprises the time master (M1, M2) transmitting to the time slave (S1, S2) at least one further time synchronization message (SY12) for synchronizing the time slave clock (CS1, CS2), wherein the further time synchronization message (SY12) contains time information for reducing a temporal deviation between the time slave clock (CS1, CS2) and the time master clock (CM1, CM2), wherein it is advantageously provided that the time slave (S1, S2) checks whether it obtains time synchronization messages (SY1) from the time master (M1, M2) within a predetermined temporal interval and/or within a predetermined cycle time, and/or that the time slave (S1, S2), after obtaining the at least one further time synchronization message (SY1), transmits to the time master (M1, M2) at least one further time back-synchronization message (SY13) with at least one time slave time indication (TM13) generated on the basis of the time slave clock (CS1, CS2) set by means of the time master time indication (TM1) in the at least one further time synchronization message (SY1), wherein the time master (M1, M2) generates at least one further follow-up action on the basis of a comparison of this further time slave time indication (TM13) with time information of its time master clock (CM1, CM2).

7. Method according to any of the preceding claims, **characterized in that** the time synchronization message (SY1) and/or the time back-synchronization message (SY3) have/has a check code, in particular a CRC code (CRC = cyclic redundancy check).

8. Method according to any of the preceding claims, **characterized in that** the time slave (S1, S2) forms a time master (M1, M2) for at least one further sub-time slave (S1, S2), wherein the time slave (S1, S2) executes the method steps of the time master (M1, M2) according to any of the preceding claims with respect to the sub-time slave (S1, S2) and the sub-time slave (S1, S2) executes the method steps of the time slave (S1, S2) according to any of the preceding claims.

9. Method according to any of the preceding claims, **characterized in that** the time master (M1, M2) has at least one time slave monitoring clock (CS2, CS3), wherein the time master (M1, M2) sets the time slave monitoring clock (CS2, CS3) on the basis of the time slave time indication (TM3) of the time back-synchronization message (SY3), so that the time slave monitoring clock (CS2, CS3) has a clock time corresponding to the time slave clock (CS2, CS3) of the time slave (S1, S2), wherein it is advantageously provided that the time master (M1, M2) has a time slave monitoring clock (CS2, CS3) for each time slave (S1, S2) synchronized by it and sets the time slave monitoring clocks (CS2, CS3) on the basis of the time back-synchronization messages (SY3) obtained from the respective time slave (S1, S2).

10. Method according to any of the preceding claims, **characterized in that** the time back-synchronization message (SY3) is a message which is separate from reporting messages of the time slave (S1, S2) and which serves exclusively for the feedback of the time slave time indication (TM3) to the time master (M1, M2), and/or in that the time synchronization message (SY1) is formed according to the AUTOSAR standard or the IEEE-1588 standard.

11. Method according to any of the preceding claims, **characterized in that** the time master (M1, M2) transmits to the time slave (S1, S2), after sending the time synchronization message (SY1), a sending time information message (SY2) containing sending time information (VM2) about the instant of sending the time synchronization message (SY1), wherein the time slave (S1, S2) can set and/or correct the time slave clock (CS1, CS2) on the basis of the sending time information (VM2) the time slave clock (CS1, CS2) and/or **in that** the time slave (S1, S2) transmits to the time master (M1, M2), after sending the time back-synchronization message (SY3), a sending time information message (SY4) containing sending time information (VM4) about the instant of sending the time back-synchronization message (SY3), wherein the time master (M1, M2) can set and/or correct a time slave monitoring clock (CS2, CS3) assigned to the time slave (S1, S2) on the basis of the sending time information (VM4).

12. System (10) for time synchronization, wherein the system (10) comprises a time master (M1, M2) and at least one time slave (S1, S2), wherein the time master (M1, M2) has a time master clock (CM1, CM2) and the time slave (S1, S2) has a time slave clock (CS1, CS2), wherein the time master (M1, M2) has transmission means for transmitting to the time slave (S1, S2) a time synchronization message (SY1) with a time master time indication (TM1) - generated on the basis of the time master clock (CM1, CM2) - for synchronizing the time slave clock (CS1, CS2) with the time master clock (CM1, CM2), wherein the time slave (S1, S2) has setting means for setting its time slave clock (CS1, CS2) on the basis of the time master time indication (TM1) of the time synchronization message (SY1), the time slave (S1, S2) has transmission means for transmitting to the time master (M1, M2) a time back-synchronization message (SY3) (SY3) with at least one time slave time indication (TM3), wherein the time back-synchronization message (SY3) is generated on the basis of the time slave clock (CS1, CS2) set by means of the time master time indication (TM1) of the time synchronization message (SY1), and wherein the time master (M1, M2) has generation means for generating at least one follow-up action on the basis of a comparison of the time slave time indication (TM3) with time information of the time master clock (CM1, CM2), **characterized in that** the time master (M1, M2) checks whether, after sending a time synchronization message (SY1) to the time slave (S1, S2), the time master obtains within a predetermined time a time back-synchronization message (SY3) from the time slave (S1, S2) that received the time synchronization message (SY1), and/or **in that** the time master (M1, M2) monitors its time master clock (CM1, CM2) and/or the time slave (S1, S2) monitors its time slave clock (CS1, CS2) for temporal jumps and/or temporal drift and/or stopping and/or **in that** the time slave (S1, S2) checks on the basis of the time slave clock (CS1, CS2) whether the time master time indication (TM1) indicated in a respective time synchronization message (SY1) is within a tolerance range and/or is plausible.

## Revendications

1. Procédé de synchronisation temporelle dans un système (10), comprenant une minuterie (M1, M2) ainsi qu'au moins un chronomètre (S1, S2), la minuterie comportant une horloge de minuterie (CM1, CM2) et le chronomètre (S1, S2) comportant une horloge de chronomètre (CS1, CS2), la minuterie (M1, M2) comportant un message de synchronisation temporelle (SY1) avec une indication de temps de minuterie (TM1) générée à l'aide de l'horloge de minuterie (CM1, CM2) pour synchroniser l'horloge de chronomètre (CS1, CS2) avec l'horloge de minuterie (CM1, CM2) sur le chronomètre (S1, S2), le chronomètre (S1, S2) réglant son horloge de chronomètre (CS1, CS2) à l'aide de l'indication de temps de minuterie (TM1) du message de synchronisation temporelle (SY1), le chronomètre (S1, S2) envoyant un message de resynchronisation temporelle (SY3) avec au moins une indication de temps de chronomètre (TM3) à la minuterie (M1, M2), le message de resynchronisation temporelle (SY3) étant généré à l'aide de l'horloge de chronomètre (CS1, CS2) réglée par l'indication de temps de minuterie (TM1) du message de synchronisation temporelle (SY1), et la minuterie (M1, M2) générant au moins une action consécutive à l'aide d'une comparaison de l'indication de temps de chronomètre (TM3) à des informations de temps de l'horloge de minuterie (CM1, CM2), **caractérisé en ce que** la minuterie (M1, M2) vérifie si, après l'envoi d'un message de synchronisation temporelle (SY1) au chronomètre (S1, S2), elle reçoit dans un temps prédéfini un message de resynchronisation temporelle (SY3) du chronomètre (S1, S2), qui a reçu le message de synchronisation temporelle (SY1), et/ou que la minuterie (M1, M2) surveille son horloge de minuterie (CM1, CM2) et/ou le chronomètre (S1, S2) surveille son horloge de chronomètre (CS1, CS2) pour détecter des sauts de temps et/ou des dérives de temps et/ou des arrêts et/ou que le chronomètre (S1, S2) vérifie à l'aide de l'horloge de chronomètre (CS1, CS2) si l'indication de temps de minuterie (TM1) indiquée dans un message de synchronisation temporelle (SY1) respectif se situe dans une plage de tolérance et/ou est plausible.

2. Procédé selon la revendication 1, **caractérisé en ce que** l'au moins une action consécutive comprend une vérification pour savoir si l'horloge de chronomètre (CS1, CS2) fonctionne dans une plage de tolérance temporelle par rapport à l'horloge de minuterie (CM1, CM2) .

3. Procédé selon la revendication 1 ou 2, **caractérisé en ce que** l'au moins une action consécutive comprend l'envoi par la minuterie (M1, M2) d'une instruction de commande (CD) au chronomètre (S1, S2) en fonction de l'indication de temps de chronomètre (TM3) du message de resynchronisation temporelle (SY3), le fait que la minuterie (M1, M2) envoie ou non l'instruction de commande (CD) au chronomètre (S1, S2) selon que l'horloge de chronomètre (CS1, CS2) fonctionne dans une plage de tolérance temporelle prédéfinie par rapport à l'horloge de minuterie (CM1, CM2) étant avantageusement prévu, et/ou que la minuterie (M1, M2) sélectionne un moment d'envoi de l'instruction de commande en fonction d'une différence de temps entre l'horloge de minuterie (CM1, CM2) et l'horloge de chronomètre (CS1, CS2) et/ou indique un moment d'exécution pour l'exécution de l'instruction de commande en fonction d'une différence de temps entre l'horloge de minuterie (CM1, CM2) et l'horloge de chronomètre (CS1, CS2) dans l'instruction de commande.

4. Procédé selon l'une des revendications précédentes, **caractérisé en ce que** l'au moins une action consécutive comprend l'envoi par la minuterie (M1, M2) au chronomètre (S1, S2) d'informations (TDI) indiquant si l'horloge de chronomètre (CS1, CS2) se trouve dans une plage de tolérance temporelle par rapport à l'horloge de minuterie (CM1, CM2) et/ou si l'horloge de chronomètre (CS1, CS2) présente une heure valide acceptée par le chronomètre (S1, S2).

5. Procédé selon l'une des revendications précédentes, **caractérisé en ce que** le chronomètre (S1, S2) envoie alors des messages de notification (M11) à la minuterie( M1, M2) seulement lorsque l'horloge de chronomètre (CS1, CS2) se trouve dans la plage de tolérance temporelle par rapport à l'horloge de minuterie (CM1, CM2) et/ou présente une heure valide acceptée par la minuterie (M1, M2), et/ou que le chronomètre (S1, S2) dote des messages de notification (M11) à l'attention de la minuterie (M1, M2) d'informations, qui indiquent si l'horloge de chronomètre (CS1, CS2) se trouve dans la plage de tolérance temporelle et/ou présente l'heure valide.

6. Procédé selon l'une des revendications précédentes, **caractérisé en ce que** l'au moins une action consécutive comprend l'envoi par la minuterie (M1, M2) au chronomètre (S1, S2) au moins d'un autre message de synchronisation temporelle (SY12) pour synchroniser l'horloge de chronomètre (CS1, CS2), l'autre message de synchronisation temporelle (SY12) contenant des informations temporelles pour réduire un écart temporel entre l'horloge de chronomètre (CS1, CS2) et l'horloge de minuterie (CM1, CM2), le fait que le chronomètre (S1, S2) vérifie s'il reçoit des messages de synchronisation temporelle (SY1) de la minuterie (M1, M2) dans un intervalle de temps prédéfini et/ou dans un temps de cycle prédéfini étant avantageusement prévu, et/ou que le chronomètre (S1, S2) envoie à la minuterie (M1, M2), après réception de l'au moins un autre message de synchronisation temporelle (SY1), au moins un autre message de resynchronisation temporelle (SY13) avec au moins une indication de temps de chronomètre (TM13), qui est générée à l'aide de l'horloge de chronomètre (CS1, CS2) réglée par l'indication de temps de minuterie (TM1) dans l'au moins un autre message de synchronisation temporelle (SY1), la minuterie (M1, M2) générant au moins une autre action consécutive à l'aide d'une comparaison de ladite autre indication de temps de chronomètre (TM13) avec une information temporelle de son horloge de minuterie (CM1, CM2).

7. Procédé selon l'une des revendications précédentes, **caractérisé en ce que** le message de synchronisation temporelle (SY1) et/ou le message de resynchronisation temporelle (SY3) comportent un code de vérification, en particulier un code CRC (CRC = vérification de redondance cyclique).

8. Procédé selon l'une des revendications précédentes, **caractérisé en ce que** le chronomètre (S1, S2) forme une minuterie (M1, M2) pour au moins un autre chronomètre secondaire (S1, S2), le chronomètre (S1, S2) exécutant les étapes de procédé de la minuterie (M1, M2) selon l'une des revendications précédentes en ce qui concerne le chronomètre secondaire (S1, S2) et le chronomètre secondaire (S1, S2) exécutant les étapes de procédé du chronomètre (S1, S2) selon l'une des revendications précédentes.

9. Procédé selon l'une des revendications précédentes, **caractérisé en ce que** la minuterie (M1, M2) comporte au moins une horloge de surveillance de chronomètre (CS2, CS3), la minuterie (M1, M2) réglant l'horloge de surveillance de chronomètre (CS2, CS3) à l'aide de l'indication de temps de chronomètre (TM3) du message de resynchronisation temporelle (SY3), si bien que l'horloge de surveillance de chronomètre (CS2, CS3) présente une durée correspondant à l'horloge de chronomètre (CS2, CS3) du chronomètre (S1, S2), le fait que la minuterie (M1, M2) comporte une horloge de surveillance de chronomètre (CS2, CS3) pour chaque chronomètre (S1, S2) synchronisé par celle-ci et règle les horloges de surveillance de chronomètre (CS2, CS3) à l'aide des messages de resynchronisation temporelle (SY3) reçus du chronomètre (S1, S2) respectif étant avantageusement prévu.

10. Procédé selon l'une des revendications précédentes, **caractérisé en ce que** le message de resynchronisation temporelle (SY3) est un message séparé des messages de notification du chronomètre (S1, S2), qui sert exclusivement à renvoyer l'indication de temps de chronomètre (TM3) à la minuterie (M1, M2), et/ou que le message de synchronisation temporelle (SY1) est formé selon la norme AUTOSAR ou la norme IEEE 1588.

11. Procédé selon l'une des revendications précédentes, **caractérisé en ce que** la minuterie (M1, M2) envoie au chronomètre (S1, S2), après l'envoi du message de synchronisation temporelle (SY1), un message d'information d'heure d'envoi (SY2), qui contient des informations d'heure d'envoi (VM2) sur le moment de l'envoi du message de synchronisation temporelle (SY1), le chronomètre (S1, S2) pouvant régler et/ou corriger l'horloge de chronomètre (CS1, CS2) à l'aide des informations d'heure d'envoi (VM2) l'horloge de chronomètre (CS1, CS2), et/ou que le chronomètre (S1, S2) envoie à la minuterie (M1, M2) après l'envoi du message de synchronisation temporelle (SY3) un message d'information d'heure d'envoi (SY4), qui contient des informations d'heure d'envoi (VM4) sur le moment d'envoi du message de resynchronisation temporelle (SY3), la minuterie (M1, M2) pouvant régler et/ou corriger une horloge de surveillance de chronomètre (CS2, CS3) associée au chronomètre (S1, S2) à l'aide des informations d'heure d'envoi (VM4).

12. Système (10) de synchronisation temporelle, le système (10) comprenant une minuterie (M1, M2) ainsi qu'au moins un chronomètre (S1, S2), la minuterie (M1, M2) comportant une horloge de minuterie (CM1, CM2) et le chronomètre (S1, S2) comportant une horloge de chronomètre (CS1, CS2), la minuterie (M1, M2) comportant des moyens d'envoi pour envoyer un message de synchronisation temporelle (SY1) avec une indication de temps de minuterie (TM1) générée à l'aide de l'horloge de minuterie (CM1, CM2) pour synchroniser l'horloge de chronomètre (CS1, CS2) avec l'horloge de minuterie (CM1, CM2) sur le chronomètre (S1, S2), le chronomètre (S1, S2) comportant des moyens de réglage pour régler son horloge de chronomètre (CS1, CS2) à l'aide de l'indication de temps de minuterie (TM1) du message de synchronisation temporelle (SY1), le chronomètre (S1, S2) comportant des moyens d'envoi pour envoyer un message de resynchronisation temporelle (SY3) (SY3) avec au moins une indication de temps de chronomètre (TM3) à la minuterie (M1, M2), le message de resynchronisation temporelle (SY3) étant généré à l'aide de l'horloge de chronomètre (CS1, CS2) réglée par l'indication de temps de minuterie (TM1) du message de synchronisation temporelle (SY1), et la minuterie (M1, M2) comportant des moyens de génération pour générer au moins une action consécutive à l'aide d'une comparaison de l'indication de temps de chronomètre (TM3) à des informations de temps de l'horloge de minuterie (CM1, CM2), **caractérisé en ce que** la minuterie (M1, M2) vérifie si, après l'envoi d'un message de synchronisation temporelle (SY1) au chronomètre (S1, S2), elle reçoit un message de resynchronisation temporelle (SY3) du chronomètre (S1, S2) qui a reçu le message de synchronisation temporelle (SY1) dans un délai prédéfini, et/ou que la minuterie (M1, M2) surveille son horloge de minuterie (CM1, CM2) et/ou le chronomètre (S1, S2) surveille son horloge de chronomètre (CS1, CS2) pour détecter des sauts de temps et/ou des dérives de temps et/ou des arrêts et/ou que le chronomètre (S1, S2) vérifie à l'aide de l'horloge de chronomètre (CS1, CS2) si l'indication de temps de minuterie (TM1) indiquée dans un message de synchronisation temporelle (SY1) respectif se situe dans une plage de tolérance et/ou est plausible.
